# EUROPÄISCHE PATENTANMELDUNG

(11) **EP 3 249 801 A1**
(43) Veröffentlichungstag der Anmeldung: **29.11.2017**
(21) Anmeldenummer: 16170763.3
(22) Anmeldetag: 23.05.2016
(51) Int. Cl.: H02P 9/00

(54) **ANLAGE UND VERFAHREN ZUM ERZEUGEN EINER IN EIN STROMNETZ EINZUSPEISENDEN DREIPHASENWECHSELSPANNUNG**

(71) Anmelder: Siemens Aktiengesellschaft, 80333 München (DE)
(72) Erfinder: Lehmann, Christoph, 47506 Neukirchen-Vluyn (DE); Juretzek, Uwe, 91058 Erlangen (DE)

(57) **Zusammenfassung**

Die Erfindung betrifft eine Anlage zum Erzeugen einer in ein Stromnetz einzuspeisenden Dreiphasenwechselspannung, aufweisend wenigstens eine Turbine, wenigstens einen mit der Turbine angetriebenen Drehstromgenerator, wobei ein Generatorläufer des Drehstromgenerators drehfest an einen Turbinenläufer der Turbine gekoppelt ist, wenigstens einen ausgangsseitig elektrisch mit dem Drehstromgenerator verbundenen Transformator, mit dem eine von dem Drehstromgenerator erzeugte erste Dreiphasenwechselspannung mit einer ersten Spannungshöhe und einer ersten Frequenz in eine zweite Dreiphasenwechselspannung mit einer zweiten Spannungshöhe, die geringer als die erste Spannungshöhe ist, und der ersten Frequenz umwandelbar ist, wenigstens einen ausgangsseitig elektrisch mit dem Transformator verbundenen Frequenzumrichter, über den eine Läuferwicklung des Generatorläufers mit einer dritten Dreiphasenwechselspannung versorgbar ist und mit dem die zweite Dreiphasenwechselspannung mit der zweiten Spannungshöhe und der ersten Frequenz in die dritte Dreiphasenwechselspannung mit der zweiten Spannungshöhe und einer zweiten Frequenz, die niedriger als die erste Frequenz ist, umwandelbar ist, wobei der Frequenzumrichter derart ausgelegt oder derart steuer- und/oder regelbar ist, dass die zweite Frequenz einer Differenz zwischen einer Netzfrequenz des Stromnetzes und der ersten Frequenz entspricht.

## Beschreibung

Die Erfindung betrifft eine Anlage zum Erzeugen einer in ein Stromnetz einzuspeisenden Dreiphasenwechselspannung, aufweisend wenigstens eine Turbine und wenigstens einen mit der Turbine angetriebenen Drehstromgenerator, wobei ein Generatorläufer des Drehstromgenerators drehfest an einen Turbinenläufer der Turbine gekoppelt ist.

Des Weiteren betrifft die Erfindung ein Verfahren zum Erzeugen einer in ein Stromnetz einzuspeisenden Dreiphasenwechselspannung unter Verwendung von wenigstens einer Turbine und wenigstens einem mit der Turbine angetriebenen Drehstromgenerator, wobei ein Generatorläufer des Drehstromgenerators drehfest an einen Turbinenläufer der Turbine gekoppelt ist.

Anlagen zum Erzeugen einer Dreiphasenwechselspannung und zum Versorgen eines Stromnetzes mit der Dreiphasenwechselspannung sind hinlänglich bekannt und werden in Kraftwerken eingesetzt. Eine solche Anlage umfasst wenigstens eine Turbine, beispielsweise eine Gasturbine eines Gas-und-Dampfturbinen-Kraftwerks (GuD-Kraftwerk) oder eines Gasturbinen-Kraftwerks oder eine Dampfturbine, und wenigstens einen mit der Turbine angetriebenen Drehstromgenerator, insbesondere Turbogenerator.

Ein Turbinenläufer der Turbine ist herkömmlich starr bzw. drehfest mit einem Generatorläufer des Drehstromgenerators verbunden. Um durch eine Rotation des Turbinenläufers eine Dreiphasenwechselspannung mit einer üblichen Netzfrequenz in Höhe von 50 Hz oder 60 Hz mit dem Drehstromgenerator erzeugen und in das Stromnetz einspeisen zu können, muss der Turbinenläufer also herkömmlich mit einer Frequenz in Höhe von 50 Hz bzw. 60 Hz rotieren.

Da die Leistung und der Wirkungsgrad von Gasturbinen mit einer Betriebsfrequenz von 50 Hz (50Hz-Gasturbinen) größer sind als bei entsprechenden 60Hz-Gasturbinen, besteht ein Interesse daran, 50Hz-Gasturbinen auch zur Versorgung von Stromnetzen mit einer Netzfrequenz von 60 Hz (60Hz-Stromnetzen) einzusetzen. Beispielsweise ist die Leistung der größten 50Hz-Gasturbine, bedingt durch den Skalierungsansatz beim Design, um 44 % größer als die der größten 60Hz-Gasturbine. Allgemein kann bei 50Hz-Gasturbinen, wegen der geringeren Drehzahl, eine insgesamt höhere Leistungsgrenze als bei 60Hz-Gasturbinen angesetzt werden, da auch bei entsprechend längeren Turbinenlaufschaufeln die auf die Turbinenlaufschaufeln einwirkenden Fliehkräfte beherrscht werden können. Der Wirkungsgradvorteil einer 50Hz-Gasturbinenvariante gegenüber einer 60Hz-Gasturbinenvariante liegt bei skalierten Gasturbinen (d.h. die eine Turbinenvariante wurde über Skalierungsfaktoren von einer Basisturbinenvariante abgeleitet) bei etwa 0,3 %, insbesondere durch die geringeren Spaltverluste bei der 50Hz-Gasturbinenvariante.

Eine Aufgabe der Erfindung ist es, die Einsetzbarkeit von Turbinen, insbesondere Gasturbinen, deren Betriebsfrequenz kleiner als eine Netzfrequenz eines Stromnetzes ist, zum Versorgen des Stromnetzes mit elektrischer Energie zu ermöglichen. Eine weitere Aufgabe der Erfindung ist es, einen Frequenzstützbetrieb einer Anlage zum Erzeugen einer in ein Stromnetz einzuspeisenden Dreiphasenwechselspannung zu verbessern.

Eine erfindungsgemäße Anlage zum Erzeugen einer in ein Stromnetz einzuspeisenden Dreiphasenwechselspannung umfasst wenigstens eine Turbine und wenigstens einen mit der Turbine angetriebenen Drehstromgenerator, wobei ein Generatorläufer des Drehstromgenerators drehfest an einen Turbinenläufer der Turbine gekoppelt ist. Erfindungsgemäß umfasst die Anlage wenigstens einen ausgangsseitig elektrisch mit dem Drehstromgenerator verbundenen Transformator, mit dem eine von dem Drehstromgenerator erzeugte erste Dreiphasenwechselspannung mit einer ersten Spannungshöhe und einer ersten Frequenz in eine zweite Dreiphasenwechselspannung mit einer zweiten Spannungshöhe, die geringer als die erste Spannungshöhe ist, und der ersten Frequenz umwandelbar ist. Des Weiteren umfasst die Anlage wenigstens einen ausgangsseitig elektrisch mit dem Transformator verbundenen Frequenzumrichter, über den eine Läuferwicklung des Generatorläufers mit einer dritten Dreiphasenwechselspannung versorgbar ist und mit dem die zweite Dreiphasenwechselspannung mit der zweiten Spannungshöhe und der ersten Frequenz in die dritte Dreiphasenwechselspannung mit der zweiten Spannungshöhe und einer zweiten Frequenz, die niedriger als die erste Frequenz ist, umwandelbar ist. Der Frequenzumrichter ist derart ausgelegt oder derart steuer- und/oder regelbar, dass die zweite Frequenz einer Differenz zwischen einer Netzfrequenz des Stromnetzes und der ersten Frequenz entspricht.

Ist die Drehfrequenz des Turbinenläufers, und somit des Generatorläufers, kleiner als die jeweilige Netzfrequenz des zu versorgenden Stromnetzes, ist die erste Frequenz der von dem Drehstromgenerator erzeugten ersten Dreiphasenwechselspannung niedriger als die Netzfrequenz. Um mit dem Drehstromgenerator dennoch eine Dreiphasenwechselspannung mit der Netzfrequenz erzeugen zu können, wird die Läuferwicklung des Generatorläufers nicht, wie herkömmlich, mit einer Gleichspannung, sondern mit einer Dreiphasenwechselspannung mit der zweiten Frequenz versorgt, wobei die zweite Frequenz der jeweiligen Differenz zwischen der Netzfrequenz des Stromnetzes und der ersten Frequenz entspricht. Hierdurch wird zwischen dem Generatorläufer und einem Generatorständer des Drehstromgenerators ein Magnetfeld erzeugt, das sich mit der Netzfrequenz dreht. Eine Ständerwicklung des Generatorständers sieht also ein Magnetfeld, das sich mit der Netzfrequenz dreht, wodurch in die Ständerwicklung eine Dreiphasenwechselspannung mit der Netzfrequenz induziert wird.

Bei einer Drehfrequenz des Generatorläufers beispielsweise in Höhe von 50 Hz kann zwischen dem Generatorläufer und dem Generatorständer durch eine geeignete Wahl der zweiten Frequenz der dritten Dreiphasenwechselspannung ein sich mit einer Drehfrequenz in Höhe von 60 Hz drehendes Magnetfeld ausgebildet werden. Dies hat zur Folge, dass in die Ständerwicklung eine Dreiphasenwechselspannung mit einer Frequenz in Höhe von 60 Hz induziert wird. Hierdurch liegt an einem Maschinentransformator, über den der Drehstromgenerator mit dem zu versorgenden Stromnetz verbunden ist, eine 60Hz-Dreiphasenwechselspannung an, um diese mit entsprechender Leistung einem 60Hz-Stromnetz zur Verfügung stellen zu können. Folglich ist es mit der erfindungsgemäßen Anlage möglich, mit einer Turbine, deren Turbinenläuferdrehfrequenz kleiner als die Netzfrequenz des Stromnetzes ist, eine Dreiphasenwechselspannung mit der Netzfrequenz in das Stromnetz einzuspeisen. Hierdurch kann eine höhere spezifische Leistung erzielt werden.

Durch die Versorgung der Läuferwicklung des Generatorläufers mit der dritten Dreiphasenwechselspannung mit der zweiten Frequenz kann also die Ständerwicklung des Generatorständers ein Magnetfeld sehen, das sich mit der Netzfrequenz dreht. Durch eine geeignete Wahl der zweiten Frequenz kann hierdurch eine Frequenzunterstützung durch die erfindungsgemäße Anlage unabhängig von der Drehfrequenz des Generatorläufers gewährleistet werden. Insbesondere kann die erfindungsgemäße Anlage eine Frequenzstützung in einem sehr viel breiteren Frequenzband anbieten als herkömmliche Anlagen. Die Auslegung der Komponenten der erfindungsgemäßen Anlage muss zudem nicht derart erfolgen, dass die Komponenten der Anlage ein bestimmtes Frequenzstützband erfüllen können müssen. Stattdessen können die Komponenten auf einen bestimmten Betriebspunkt ausgelegt werden, in welchem insbesondere die Anlage einen hohen Wirkungsgrad und eine hohe Dauerhaftigkeit aufweist. Es kann mit der Erfindung also eine Anlage mit einem verbesserten Frequenzstützbetrieb bereitgestellt werden. Beispielsweise müssen bei Netzunterfrequenz die angeschlossenen Turbinen mehr Leistung erbringen, um die Netzfrequenz stützen zu können. Bei sinkender Drehzahl des Turbinenläufers bzw. des Generatorläufers, bedingt durch die sinkende Netzfrequenz, sinkt aber auch die Leistung. Dies kann mit der erfindungsgemäßen Anlage verhindert werden, da die Turbine über die Drehstromgenerator-Frequenzumrichter-Anordnung von der Netzfrequenz entkoppelt werden kann und insofern weiter ihre volle Leistung erbringen kann.

Erfindungsgemäß können Abweichungen der Drehfrequenz des Generatorläufers bzw. des Turbinenläufers von der Netzfrequenz des Stromnetzes durch eine Versorgung der Läuferwicklung des Generatorläufers mit der dritten Dreiphasenwechselspannung mit der zweiten Spannungshöhe und der zweiten Frequenz ausgeglichen werden. Hierdurch kann mittels des Drehstromgenerators eine Dreiphasenwechselspannung mit der Netzfrequenz erzeugt werden, auch wenn sich die Drehfrequenz des Generatorläufers von der Netzfrequenz unterscheidet. Daher muss nicht, wie herkömmlich, die Drehzahl des Turbinenläufers bzw. des damit drehfest verbundenen Generatorläufers variiert werden, um die Frequenz der von dem Drehstromgenerator erzeugten Dreiphasenwechselspannung an die Netzfrequenz anpassen zu können. Vielmehr kann die Anlage, bzw. können deren Komponenten, wie etwa die Turbine und der Drehstromgenerator, auf einen optimalen Betriebspunkt ausgelegt und während der genannten Angleichung an dem Betriebspunkt gehalten werden, was den Wirkungsgrad der Anlage insgesamt erhöht.

Gemäß der Erfindung kann beispielsweise eine 50Hz-Gasturbine, deren Turbinenläufer starr bzw. drehfest mit dem Generatorläufer eines 50HZ-Drehstromgenerators verbunden ist, zum Versorgen eines 60Hz-Stromnetzes eingesetzt werden. Die in diesem Fall aus dem 50Hz-Drehstromgenerator, dem Transformator und dem Frequenzumrichter gebildete Anordnung kann somit erfindungsgemäß von einer 50Hz-Gasturbine angetrieben werden und eine Dreiphasenwechselspannung mit einer Frequenz in Höhe von 60 Hz in ein 60Hz-Stromnetz einspeisen.

Die Leistung und der Wirkungsgrad einer solchen Anlage sind gegenüber einer herkömmlichen 60Hz-Gasturbineneinheit erheblich höher. Da beispielsweise die maximale Leistung der größten 50Hz-Gasturbine um 44 % größer ist als die maximale Leistung der größten 60Hz-Gasturbine, können größere 60Hz-Kraftwerke mit weniger Blöcken aufgebaut werden. Beispielsweise können durch die Erfindung Kraftwerke, die bislang mit drei 60Hz-Gasturbinen-GuD-Strängen realisiert worden sind, mit zwei 50Hz-Gasturbinen-GuD-Strängen realisiert werden. Dadurch entfällt ein ganzer GuD-Strang, bestehend aus Gasturbine, Geno, Schaltkupplung, Kessel, Dampfturbinen und Leittechnik, was zu einer enormen Kostenersparnis führt. Bei den 50Hz-Turbinen selbst lässt sich auch eine entsprechende Reduktion der spezifischen Kosten beobachten, da die 50Hz-Turbinenversion von der 60Hz-Turbinenversion in der Regel durch Skalierung abgeleitet wird und dabei die Kosten weit weniger steigen als die Leistung. Dies gibt genügend Raum, um die insbesondere durch den Frequenzumrichter verursachten Zusatzkosten zu kompensieren.

Der Drehstromgenerator umfasst einen Drehstromständer und einem Drehstromgeneratorläufer. Der Drehstromständer ist vorzugsweise für die Erzeugung einer Dreiphasenwechselspannung mit der Netzfrequenz, beispielsweise 60 Hz, eines Stromnetzes ausgelegt und über einen Maschinentransformator direkt mit dem Stromnetz verbunden. Der Drehstromständer kann in einer für Synchrongeneratoren üblichen Bauform mit einer geblechten Ständereinheit und einer daran angeordneten, dreiphasigen Zweischicht-Ständerwicklung ausgeführt sein. Die Spannung der Ständerwicklung kann in einer für die jeweilige Anwendung üblichen Größe, für eine 60Hz-Anwendung beispielsweise bei 22 kV, liegen.

Der Drehstromgeneratorläufer ist direkt mit dem Turbinenläufer der Turbine gekoppelt. Der Generatorläufer kann mit einer geblechten Läufereinheit und einer daran angeordneten, dreiphasigen Läuferwicklung ausgeführt sein. Die dreiphasige Läuferwicklung kann im Stern verschaltet sein. Die Höhe der zweiten Spannung kann bei etwa 5 kV liegen. Die drei Phasen der Läuferwicklung sind elektrisch mit Schleifringen auf einer Läuferwelle des Generatorläufers verbunden. Auf den Schleifringen kann ein dreiphasiges Bürstensystem laufen, das aus mehreren Kohlebürsten je Phase aufgebaut und an einem stehenden Bürstenapparat montiert sein kann. Über das Bürstensystem kann die dritte Dreiphasenspannung von dem Frequenzumrichter über den stehenden dreiphasigen Bürstenapparat an die Läuferwicklung des drehenden Generatorläufers übertragen werden.

Der Frequenzumrichter kann ausgangsseitig elektrisch mit dem dreiphasigen Bürstenapparat verbunden sein. Hierdurch kann die Läuferwicklung beispielsweise mit einem 5kV/10Hz-Dreiphasensystem versorgt werden. Der Frequenzumrichter kann beispielsweise als Umrichter mit konstantem Spannungszwischenkreis aufgebaut sein.

Die erfindungsgemäße Anlage kann auch genutzt werden, wenn die Drehzahl der Turbine frei von den üblichen Netzfrequenzen in Höhe von 50 Hz und 60 Hz gewählt werden soll, um so die maximale Leistung der Turbine weiter zu erhöhen. Insbesondere kann die erfindungsgemäße Anlage auf Turbinen mit beliebiger Betriebsdrehzahl und Drehstromnetze beliebiger Netzfrequenz angewendet werden. Dies erlaubt eine optimale Auslegung der Turbine hinsichtlich maximaler Leistung und maximalem Wirkungsgrad. So kann beispielsweise eine 45Hz-Gasturbine, deren maximale Leistung die einer 50Hz-Gasturbine übersteigt, durch entsprechende Erhöhung der zweiten Frequenz im Ausgangskreis des Frequenzumrichters eine 60Hz-Dreiphasenwechselspannung in ein 60Hz-Stromnetz einspeisen. Ebenfalls kann eine 45Hz-Gasturbine mit der erfindungsgemäßen Anlage bei entsprechender Auslegung der Komponenten und geeigneter Wahl der zweiten Frequenz auch eine 50Hz-Dreiphasenwechselspannung in ein 50Hz-Stromnetz einspeisen.

Gemäß der Erfindung können große Gasturbinen mit einer Drehstromgenerator-Transformator-Frequenzumrichter-Konfiguration kombiniert werden, die es ermöglicht, Gasturbinen mit einer von der Netzfrequenz abweichenden Drehzahl an ein Stromnetz anzuschließen. Mit einem erfindungsgemäßen Drehstromgenerator kann beispielsweise ein 60Hz-Dreiphasensystem bei Antrieb mit einer 50Hz-Gasturbine erzeugt werden, wodurch 50Hz-Gasturbinen auf dem 60Hz-Markt angewendet werden können. Die Leistung und der Wirkungsgrad einer solchen Konfiguration sind gegenüber einer 60Hz-Gasturbineneinheit erhöht.

Aus der Betrachtung dieser Kosten- und Wirkungsgradsituation ergibt sich die Möglichkeit, grundsätzlich auf die 60Hz-Produktlinie bei großen Gas- aber auch Dampfturbinen zu verzichten, da die 50Hz-Produktlinie die 60Hz-Produktlinie wegen höherer Leistung, niedrigeren spezifischen Kosten und verbesserten Wirkungsgrad ersetzen kann. Darüber hinaus ergeben sich Synergien bei der Forschung und Entwicklung sowie in der Lieferkette (höhere Stückzahlen, etc.), die in internen Kosteneinsparungen im 3-stelligen Millionen-Euro-Bereich resultieren. Dies gilt für noch zu entwickelnde Turbinen genauso wie für das existierende Portfolio. Für Letzteres sind dafür sogar die größeren positiven Effekte zu erwarten.

Bei einer beispielhaften Betrachtung einer 2+1-GuD-Konfiguration, bei der zwei 5000F-Gasturbinen und eine 60Hz-Dampfturbine jeweils mit ihren konventionellen luftgekühlten Drehstromgeneratoren durch zwei 4000F-Gasturbinen und eine 50Hz-Dampfturbine jeweils mit der Drehstromgenerator-Transformator-Frequenzumrichter-Anordnung ersetzt werden, steigt die Leistung um etwa 190 MW. Die absoluten Package-Kosten für die Gasturbinen, die Dampfturbine, die Drehstromgeneratoren und Komponenten-Hilfssysteme bleiben gleich, und das bereits unter Berücksichtigung von vergleichsweise hohen Frequenzumrichterkosten von etwa 50€/kW. Des Weiteren sinken spezifische Package-Kosten um über 25%. Zudem steigt der Gesamtanlagenwirkungsgrad (GuD) um 0,6 %, wobei bereits die zusätzlichen, konservativ ermittelten, Frequenzumrichterverluste von 0,2% berücksichtigt sind. Ferner ist der Nutzen bezüglich Synergien bei der Forschung und Entwicklung und der Lieferkette bei Gasturbinen mit reduzierter Betriebsfrequenz größer als bei anderen aus einer Entwicklung stammenden Frames, da es sich hierbei um voneinander unabhängig entwickelte Gasturbinentypen handelt, die in dieser Hinsicht kaum voneinander profitieren können.

Bevorzugt umfasst die Anlage wenigstens eine dreiphasige Kondensatorbatterie, die zu einem Ausgangskreis des Frequenzumrichters parallelgeschaltet ist. Die dreiphasige Kondensatorbatterie liefert eine Blindleistung für die Läuferwicklung. Hierdurch wird der von dem Frequenzumrichter zu liefernde elektrische Strom verringert, wodurch wiederum die Baugröße des Frequenzumrichters reduziert werden kann. Insbesondere ist es aufgrund des Vorhandenseins der Kondensatorbatterie möglich, nicht die gesamte Leistung des Drehstromgenerators, sondern lediglich etwa 20 % dieser Leistung über den Frequenzumrichter zu fahren, was zu einer entsprechenden Verringerung der Frequenzumrichterkosten und zu einer Verbesserung des Gesamtwirkungsgrades der aus dem Drehstromgenerator und dem Frequenzumrichter gebildeten Anordnung führt. Der insgesamt etwas schlechtere Wirkungsgrad dieser Anordnung gegenüber einem einfachen Drehstromgenerator kann durch den verbesserten Wirkungsgrad der treibenden Turbine, insbesondere mit reduzierter Betriebsfrequenz, überkompensiert werden. Die Generatorspannung kann dennoch in einer herkömmlichen Größenordnung liegen.

Die Anlage umfasst bevorzugt wenigstens eine kommunikationstechnisch mit dem Frequenzumrichter verbundene Steuer- und/oder Regelelektronik, die eingerichtet ist, eine momentane Differenz zwischen der Netzfrequenz des Stromnetzes und der ersten Frequenz zu erfassen und den Frequenzumrichter in Abhängigkeit der momentanen Differenz anzusteuern. Mit der Steuer- und/oder Regelelektronik kann somit der Frequenzumrichter in Abhängigkeit der erfassten momentanen Differenz zwischen der Netzfrequenz des Stromnetzes und der ersten Frequenz gesteuert und/oder geregelt werden. Die momentane Netzfrequenz und die momentane erste Frequenz können über eine Sensorik erfasst und der Steuer- und/oder Regelelektronik zur Auswertung zugeführt werden.

Nach einem erfindungsgemäßen Verfahren zum Erzeugen einer in ein Stromnetz einzuspeisenden Dreiphasenwechselspannung unter Verwendung von wenigstens einer Turbine und wenigstens einem mit der Turbine angetriebenen Drehstromgenerator, wobei ein Generatorläufer des Drehstromgenerators drehfest an einen Turbinenläufer der Turbine gekoppelt ist, wird eine Läuferwicklung des Generatorläufers mit einer Dreiphasenwechselspannung mit einer Frequenz versorgt, die einer Differenz zwischen einer Netzfrequenz des Stromnetzes und einer Drehfrequenz des Generatorläufers entspricht.

Mit dem Verfahren sind die oben mit Bezug auf die Anlage genannten Vorteile entsprechend verbunden. Insbesondere kann die Anlage gemäß einer ihrer Ausgestaltungen oder einer beliebigen Kombination von wenigstens zwei dieser Ausgestaltungen miteinander zur Durchführung des Verfahrens verwendet werden. Insofern können vorteilhafte Ausgestaltungen der Anlage vorteilhafte Ausgestaltungen des Verfahrens sein, auch wenn hierauf im Folgenden nicht explizit hingewiesen wird.

Bevorzugt wird die Dreiphasenwechselspannung durch Umwandlung einer von dem Drehstromgenerator erzeugten Dreiphasenwechselspannung erzeugt. Hierzu kann die Transformator-Frequenzumrichter-Anordnung der erfindungsgemäßen Anlage verwendet werden, was mit den oben genannten Vorteilen verbunden ist.

Im Folgenden wird die Erfindung unter Bezugnahme auf die anliegende Figur anhand einer bevorzugten Ausführungsform beispielhaft erläutert, wobei die nachfolgend dargestellten Merkmale sowohl jeweils für sich genommen, als auch in unterschiedlicher Kombination miteinander einen weiterbildenden oder vorteilhaften Aspekt der Erfindung darstellen können. Es zeigt:

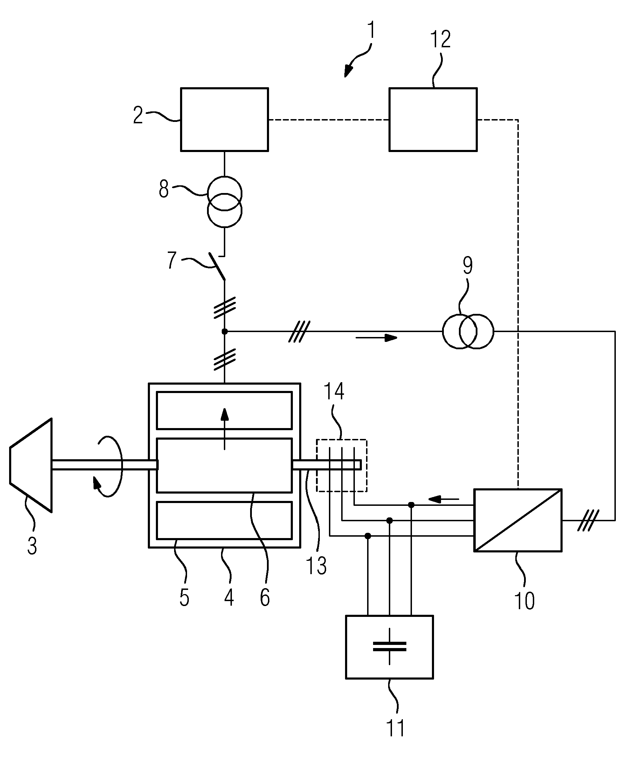

Fig. 1 eine schematische Darstellung eines Ausführungsbeispiels für eine erfindungsgemäße Anlage.

Fig. 1 zeigt eine schematische Darstellung eines Ausführungsbeispiels für eine erfindungsgemäße Anlage 1 zum Erzeugen einer in ein Stromnetz 2 einzuspeisenden Dreiphasenwechselspannung.

Die Anlage 1 umfasst eine Turbine 3 in Form einer 50Hz-Gasturbine und einen mit der Turbine 3 angetriebenen Drehstromgenerator 4. Der Drehstromgenerator 4 umfasst einen Drehstromständer 5 in Form eines 60Hz-Drehstromständers und einen Generatorläufer 6. Der Generatorläufer 6 des Drehstromgenerators 4 ist drehfest an einen nicht gezeigten Turbinenläufer der Turbine 3 gekoppelt. Der Drehstromgenerator 4 ist über einen Trennschalter 7 und einen Maschinentransformator 8 mit dem Stromnetz 2 verbunden.

Die Anlage 1 umfasst des Weiteren einen ausgangsseitig elektrisch mit dem Drehstromgenerator 4 verbundenen Transformator 9, mit dem eine von dem Drehstromgenerator 4 erzeugte erste Dreiphasenwechselspannung mit einer ersten Spannungshöhe und einer ersten Frequenz in eine zweite Dreiphasenwechselspannung mit einer zweiten Spannungshöhe, die geringer als die erste Spannungshöhe ist, und der ersten Frequenz umwandelbar ist.

Zudem umfasst die Anlage 1 einen ausgangsseitig elektrisch mit dem Transformator 9 verbundenen Frequenzumrichter 10, über den eine nicht gezeigte Läuferwicklung des Generatorläufers 6 mit einer dritten Dreiphasenwechselspannung versorgbar ist und mit dem die zweite Dreiphasenwechselspannung mit der zweiten Spannungshöhe und der ersten Frequenz in die dritte Dreiphasenwechselspannung mit der zweiten Spannungshöhe und einer zweiten Frequenz, die niedriger als die erste Frequenz ist, umwandelbar ist. Der Frequenzumrichter 10 ist derart ausgelegt oder derart steuer- und/oder regelbar, dass die zweite Frequenz einer Differenz zwischen einer Netzfrequenz des Stromnetzes 2 und der ersten Frequenz entspricht.

Die drei Phasen der Läuferwicklung des Generatorläufers 6 sind elektrisch mit nicht geteigten Schleifringen auf einer Läuferwelle 13 des Generatorläufers 6 verbunden. Auf den Schleifringen läuft ein nicht gezeigtes, dreiphasiges Bürstensystem, das aus mehreren nicht gezeigten Kohlebürsten je Phase aufgebaut und an einem stehenden Bürstenapparat 14 montiert ist. Über das Bürstensystem und über den stehenden dreiphasigen Bürstenapparat 14 wird die dritte Dreiphasenspannung von dem Frequenzumrichter 10 an die Läuferwicklung des drehenden Generatorläufers 6 übertragen.

Des Weiteren umfasst die Anlage 1 eine dreiphasige Kondensatorbatterie 11, die zu einem nicht gezeigten Ausgangskreis des Frequenzumrichters 10 parallelgeschaltet ist.

Ferner umfasst die Anlage 1 eine kommunikationstechnisch mit dem Frequenzumrichter 10 verbundene Steuer- und/oder Regelelektronik 12, die eingerichtet ist, eine momentane Differenz zwischen der Netzfrequenz des Stromnetzes 2 und der ersten Frequenz zu erfassen und den Frequenzumrichter 10 in Abhängigkeit der momentanen Differenz anzusteuern.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können vom Fachmann hieraus abgeleitet werden, ohne den Schutzumfang der Erfindung zu verlassen.

## Patentansprüche

1. Anlage (1) zum Erzeugen einer in ein Stromnetz (2) einzuspeisenden Dreiphasenwechselspannung, aufweisend wenigstens eine Turbine (3) und wenigstens einen mit der Turbine (3) angetriebenen Drehstromgenerator (4), wobei ein Generatorläufer (6) des Drehstromgenerators (4) drehfest an einen Turbinenläufer der Turbine (3) gekoppelt ist, **gekennzeichnet durch**
wenigstens einen ausgangsseitig elektrisch mit dem Drehstromgenerator (4) verbundenen Transformator (9), mit dem eine von dem Drehstromgenerator (4) erzeugte erste Dreiphasenwechselspannung mit einer ersten Spannungshöhe und einer ersten Frequenz in eine zweite Dreiphasenwechselspannung mit einer zweiten Spannungshöhe, die geringer als die erste Spannungshöhe ist, und der ersten Frequenz umwandelbar ist, wenigstens einen ausgangsseitig elektrisch mit dem Transformator (9) verbundenen Frequenzumrichter (10), über den eine Läuferwicklung des Generatorläufers (6) mit einer dritten Dreiphasenwechselspannung versorgbar ist und mit dem die zweite Dreiphasenwechselspannung mit der zweiten Spannungshöhe und der ersten Frequenz in die dritte Dreiphasenwechselspannung mit der zweiten Spannungshöhe und einer zweiten Frequenz, die niedriger als die erste Frequenz ist, umwandelbar ist,
wobei der Frequenzumrichter (10) derart ausgelegt oder derart steuer- und/oder regelbar ist, dass die zweite Frequenz einer Differenz zwischen einer Netzfrequenz des Stromnetzes (2) und der ersten Frequenz entspricht.

2. Anlage (1) gemäß Anspruch 1,
aufweisend wenigstens eine dreiphasige Kondensatorbatterie (11), die zu einem Ausgangskreis des Frequenzumrichters (10) parallelgeschaltet ist.

3. Anlage (1) gemäß Anspruch 1 oder 2,
aufweisend wenigstens eine kommunikationstechnisch mit dem Frequenzumrichter (10) verbundene Steuer- und/oder Regelelektronik (12), die eingerichtet ist, eine momentane Differenz zwischen der Netzfrequenz des Stromnetzes (2) und der ersten Frequenz zu erfassen und den Frequenzumrichter (10) in Abhängigkeit der momentanen Differenz anzusteuern.

4. Verfahren zum Erzeugen einer in ein Stromnetz (2) einzuspeisenden Dreiphasenwechselspannung unter Verwendung von wenigstens einer Turbine (3) und wenigstens einem mit der Turbine (3) angetriebenen Drehstromgenerator (4),
wobei ein Generatorläufer (6) des Drehstromgenerators (4) drehfest an einen Turbinenläufer der Turbine (3) gekoppelt ist,
**dadurch gekennzeichnet, dass**
eine Läuferwicklung des Generatorläufers (6) mit einer Dreiphasenwechselspannung mit einer Frequenz versorgt wird, die einer Differenz zwischen einer Netzfrequenz des Stromnetzes (2) und einer Drehfrequenz des Generatorläufers (6) entspricht.

5. Verfahren gemäß Anspruch 4,
wobei die Dreiphasenwechselspannung durch Umwandlung einer von dem Drehstromgenerator (4) erzeugten Dreiphasenwechselspannung erzeugt wird.
